Europäisches Patentamt

European Patent Office

Office européen des brevets

(11) Veröffentlichungsnummer : **0 438 073 A1**

## (12) EUROPÄISCHE PATENTANMELDUNG

(21) Anmeldenummer : **91100201.2**

(22) Anmeldetag : **08.01.91**

(51) Int. Cl.⁵ : **C02F 1/78, C02F 3/12, C02F 3/06**

(30) Priorität : **08.01.90 DE 4000292**

(43) Veröffentlichungstag der Anmeldung :
**24.07.91 Patentblatt 91/30**

(84) Benannte Vertragsstaaten :
**AT BE CH DE DK ES FR GB GR IT LI LU NL SE**

(71) Anmelder : **Wessling, Erwin, Dr.**
**Hanseller Mühle**
**W-4417 Altenberge (DE)**
Anmelder : **Strunck, Harald**
**Johanniterstrasse 18**
**W-4430 Steinfurt (DE)**

(72) Erfinder : **Wessling, Erwin, Dr.**
**Hanseller Mühle**
**W-4417 Altenberge (DE)**
Erfinder : **Strunck, Harald**
**Johanniterstrasse 18**
**W-4430 Steinfurt (DE)**

(74) Vertreter : **Sandmann, Joachim, Dr.**
**Hirtenstrasse 19**
**W-8012 Ottobrunn (DE)**

(54) Verfahren zur Reinigung von Wasser und Vorrichtung zur Durchführung des Verfahrens.

(57)    Wasser, das mit schwer abbaubaren Verbindungen belastet ist, wird gereinigt, indem es vorgereinigt bzw. von leicht abbaubaren Verbindungen befreit im Durchlauf einer Ozonisierung mit einer Ozonkonzentration unterzogen wird, bei der nur eine Anoxidierung der in dem Wasser enthaltenen schwer abbaubaren Verbindungen erfolgt, worauf das ozonisierte Wasser mechanisch gefiltert wird und danach einer biologischen Reinigung durch mikrobiologisch besiedelte Aktivkohle unterzogen wird.

Die Reinigung erfolgt in einer Anlage mit einem Ozonreaktor (1, 1'), der von einem Ozongenerator (4) mit Ozon versorgt wird. Der Ozonreaktor (1, 1') ist ein mechanisch wirkender Mehrschichtfilter (2, 2'), dem ein Aktivkohlefilter (3, 3') folgt, dessen Aktivkohlefüllung mikrobiologisch besiedelt ist.

Bevorzugt wird auf diese Weise Abwasser endgereinigt, das zuvor in einem herkömmlichen, für die Reinigung von kommunalen und/oder gewerblichen Abwässern benutzten Klärverfahren gereinigt wurde.

EP 0 438 073 A1

# VERFAHREN ZUR REINIGUNG VON WASSER UND VORRICHTUNG ZUR DURCHFÜHRUNG DES VERFAHRENS

Die Erfindung betrifft ein Verfahren zur Reinigung von Wasser, welches mit schwer abbaubaren Verbindungen belastet ist, unter Anwendung von Ozon, sowie eine Vorrichtung zur Durchführung des Verfahrens.

Bei einem bekannten Verfahren der eingangs genannten Art wird durch Zugabe von Ozon in zu reinigendes Abwasser versucht, schon vor einer mechanischen und/oder biologischen Klärung die Schadstoffe im Abwasser vollständig zu oxidieren und so den chemischen Sauerstoffbedarf (CSB) zu eliminieren. Nachteilig ist bei diesem Verfahren, daß die erforderlichen Ozonkonzentrationen sehr hoch und damit die verbrauchten Ozonmengen sehr groß sind, was zu hohen Verfahrenskosten führt. Außerdem ist als nachteilig anzusehen, daß zunächst praktisch nur die leicht oxidierbaren Abwasserinhaltsstoffe vom Ozon angegriffen werden und erst nach deren vollständiger Oxidierung auch die schwer abbaubaren Schadstoffe oxidiert werden. Dies hat zur Folge, daß zur Sicherstellung einer vollständigen Oxidation auch der schwer abbaubaren Schadstoffe sicherheitshalber mit Ozonüberschuß und mit langen Verweilzeiten gearbeitet werden müßte. Dies führt - bei Einhaltung dieser Bedingungen — zu einer geringen Wirtschaftlichkeit oder - bei Nichteinhaltung dieser Bedingungen — zu einer geringen Wirksamkeit des bekannten Verfahrens.

Es stellt sich daher die Aufgabe, ein Verfahren der eingangs genannten Art zu schaffen, welches sowohl eine gute Wirksamkeit aufweist als auch mit hoher Wirtschaftlichkeit durchführbar ist. Weiterhin soll eine Vorrichtung zur Durchführung des Verfahrens angegeben werden.

Die Lösung des ersten Teils dieser Aufgabe gelingt erfindungsgemäß durch ein Verfahren der eingangs genannten Art mit den kennzeichnenden Merkmalen des Patentanspruches 1.

Mit dem erfindungsgemäßen Verfahren wird erreicht, daß mit relativ geringem Ozoneinsatz eine wirksame Verminderung der Schadstoffbelastung des Wassers bewirkt werden kann. Dies gelingt insbesondere dadurch, daß nicht eine ungezielte vollständige Oxidation der Schadstoffe angestrebt wird, sondern "nur" eine Anoxidierung der schwer abbaubaren Schadstoffe durch die Ozonisierung erfolgt, d.h. eine Umwandlung bzw. Aufspaltung der Schadstoffe in biologisch zugängliche Verbindungen bzw. Verbindungsbruchstücke. Hierfür ist zwar Voraussetzung, daß leicht oxidierbare Bestandteile nicht mehr in dem Wasser enthalten sind, doch stellt diese Bedingung keine praktische Einschränkung dar, weil sie sehr leicht erfüllbar ist, wie z.B. im Fall von Abwasserreinigung durch eine vorherige herkömmliche Klärung, oder weil sie schon per se erfüllt ist, wie z.B. im Fall einer Reinigung von Brunnenwasser. Durch die Ozonisierung wird außerdem die Bildung von Mikroflocken bewirkt, die leicht mechanisch abfilterbar sind. Die Bildung von biologisch zugänglichen Verbindungen bzw. Verbindungsbruckstücken ist gleichbedeutend mit einer Erhöhung des biologischen Sauerstoffbedarfs (BSB) ; dem wird gemäß Erfindung durch die Reinigung des Wassers durch mikrobiologisch besiedelte Aktivkohle Rechnung getragen. Die wesentliche Funktion der Aktivkohle ist in diesem Verfahren also nicht wie üblich eine Adsorption von Schadstoffen, sondern das Liefern einer großen, von Mikroorganismen besiedelbaren Oberfläche. Hierdurch wird außerdem eine weitestgehende Selbstregenerierung im Bereich der biologischen Reinigung erreicht, was zu niedrigen Verfahrenskosten beiträgt. Mit dem erfindungsgemäßen Verfahren wird es erstmals möglich, den biologischen Abbaugrad durch gezielte Anregung dere Mikroorganismen direkt zu beeinflussen. Der Ozonbedarf ist bei dem neuen Verfahren wesentlich geringer als bei vergleichbaren bekannten Verfahren, was sich ebenfalls günstig auf die Kosten für die Durchführung des Verfahrens auswirkt.

Vorteilhafte Ausgestaltungen und Weiterbildungen des Verfahrens sind in den Unteransprüchen 2 bis 7 angegeben.

Das erfindungsgemäße Verfahren kann in unterschiedlichen Bereichen der Wasserreinigung nutzbringend angewendet werden. Eine bevorzugte Verwendung des Verfahrens ist die Endreinigung von Abwasser, das zuvor in einem herkömmlichen, für die Reinigung von kommunalen und/oder gewerblichen Abwässern benutzten Klärverfahren gereinigt wurde. Bei herkömmlichen Klärverfahren mit üblicherweise zwei biologischen Klärstufen ist bekannterweise häufig das Klärergebnis unbefriedigend, was dazu führt, daß ein Vorfluter, der das "geklärte" Wasser aufnimmt, chemisch stark belastet und häufig auch optisch getrübt wird. Eine Anwendung des erfindungsgemäßen Verfahrens auf Wasser, das ein solches herkömmliches Klärverfahren durchlaufen hat, kann hier wirksame Abhilfe schaffen und insbesondere den CSB-Wert des Wassers wesentlich senken und die Sichttiefe deutlich verbessern.

Eine weitere wichtige Verwendungsmöglichkeit des Verfahrens bietet sich gemäß Patentanspruch 9 bei der Reinigung von verunreinigtem Grundwasser, das z.B. durch Pestizide oder Kohlenwasserstoffe belastet ist.

Schließlich sei als möglicher Anwendungsbereich des Verfahrens noch die Reinigung von im Kreislauf geführtem Prozeßwasser für Produktions- und Verarbeitungszwecke genannt. In diesem Anwendungsbereich kann das Verfahren sogar eine Kreislaufführung des Prozeßwassers erst ermöglichen, da mit dem neuen Verfahren die Wiederaufbereitung des Prozeßwassers kostengünstiger werden kann als die vor der Ableitung erforderliche Klärung des Prozeßabwassers und die dann parallel erforderliche Neubeschaffung von Prozeßwasser z.B. aus dem Grundwasser oder einem öffentlichen Versorgungsnetz.

Die Lösung des zweiten Teils der Aufgabe gelingt erfindungsgemäß durch eine Vorrichtung gemäß dem Patentanspruch 11. Mit dieser Vorrichtung ist das zuvor beschriebene Verfahren wirtschaftlich, betriebssicher und wirksam durchführbar.

Bevorzugte Ausgestaltungen der Vorrichtung sind in den Unteransprüchen 12 bis 19 angegeben.

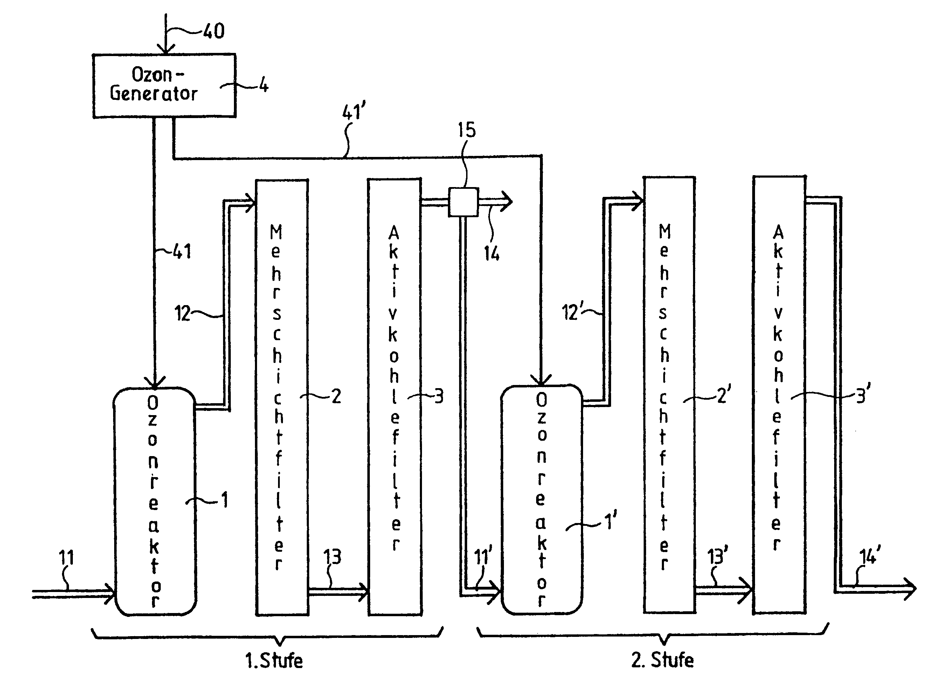

Im folgenden werden ein Ausführungsbeispiel der Vorrichtung sowie ein Ablaufbeispiel des Verfahrens anhand einer Zeichnung erläutert. Die einzige Figur der Zeichnung zeigt eine Vorrichtung gemäß Erfindung in Blockdarstellung in einer Ausgestaltung mit zwei Stufen.

Wie die Zeichnungsfigur zeigt, besteht das dargestellte Ausführungsbeispiel der Vorrichtung im wesentlichen aus einem ersten Ozonreaktor 1, einem ersten Mehrschichtfilter 2, einem ersten Aktivkohlefilter 3, einem zweiten Ozonreaktor 1', einem zweiten Mehrschichtfilter 2' und einem zweiten Aktivkohlefilter 3'. Die beiden Ozonreaktoren 1 und 1' sind von einem gemeinsamen Ozongenerator 4 aus über Ozonleitungen 41 und 41' mit Ozon versorgbar. Über eine Zuleitung 40 ist dem Ozongenerator 4 Sauerstoff zuführbar, aus welchem in bekannter Art und Weise Ozon erzeugt wird. Das über die Ozonleitungen 41 und 41' zu den Ozonreaktoren 1 und 1' geleitete Ozon, welches in Sauerstoff als Träger geführt ist, wird über Injektoren in das Innere der Ozonreaktoren 1 und 1' geleitet. Dem ersten Ozonreaktor 1 ist über einen Zulauf 11 zu reinigendes Wasser zuführbar, wobei der Zulauf 11 je nach Einsatzbereich der Vorrichtung z.B. mit dem Ablauf einer herkömmlichen Kläranlage oder mit dem Ablauf einer Brunnenanlage für eine Grundwassersanierung verbunden sein kann. Innerhalb des Ozonreaktors 1, der z.B. ein an sich bekannter Schlaufenreaktor sein kann, wird das wasser ozonisiert. Durch eine erste Verbindungsleitung 12 gelangt das ozonisierte Wasser vom ersten Ozonreaktor 1 zum nachgeschalteten ersten Mehrschichtfilter 2. Dieser Mehrschichtfilter 2 ist als Abstromfilter mit einer Bims-Quarzsand-Füllung ausgebildet und dient der mechanischen Filterung des ozonisierten Wassers. An seinem unteren Ende ist der erste Mehrschichtfilter 2 über eine zweite Verbindungsleitung 13 mit dem nachgeschalteten ersten Aktivkohlefilter 3 verbunden, welcher hier als Aufstromfilter ausgebildet ist. Die Aktivkohlefüllung dieses Filters dient dazu, eine große Oberfläche für die Ansiedlung von Mikroorganismen zu bieten, durch welche eine biologische Reinigung des vom Mehrschichtfilter 2 kommenden Wassers bewirkt wird. An seinem oberen Ende ist der erste Aktivkohlefilter 3 über ein Umschaltventil 15 wahlweise unmittelbar mit einem ersten Auslauf 14 oder mit einem Zulauf 11' der zweiten Vorrichtungsstufe verbindbar. Hierdurch wird die Möglichkeit geschaffen, die Vorrichtung wahlweise einstufig oder zweistufig zu fahren. Beispielsweise genügt es häufig, im Sommer zu Zeiten erhöhter biologischer Aktivität nur eine Stufe in Betrieb zu haben, während in der kälteren Jahreszeit beide Stufen betrieben werden.

Der Zulauf 11' der zweiten Stufe der Vorrichtung führt Wasser, das die erste Stufe bereits durchlaufen hat, dem zweiten Ozonreaktor 1' zu, in welchem wieder eine Ozonisierung des Wassers, hier allerdings mit verminderter Ozonkonzentration, erfolgt.

Durch eine weitere Verbindungsleitung 12' gelangt das Wasser vom zweiten Ozonreaktor 1' zum zweiten Mehrschichtfilter 2', welcher hier ebenfalls als Abstromfilter mit einem dem ersten Mehrschichtfilter 2 entsprechenden Aufbau ausgebildet ist. Am unteren Ende des zweiten Mehrschichtfilters 2' wird das Wasser über eine weitere Verbindungsleitung 13' dem zweiten Aktivkohlefilter 3' zugeführt, welcher hier wieder analog zum ersten Aktivkohlefilter als Aufstromfilter mit einer mikrobiologisch besiedelten Aktivkohlefüllung ausgebildet ist. Über einen Auslauf 14' schließlich wird das gereinigte Wasser abgeführt, z.B. in einen Vorfluter, ein Leitungsnetz oder einen Prozeßwasserkreislauf.

Der Ozongenerator 4 wird, wie zuvor erwähnt, vorzugsweise mit reinem Sauerstoff beschickt, womit sichergestellt wird, daß sich keine $NO_x$ -Verbindungen bilden können, die die Biomasse der biologisch besiedelten Aktivkohle in den Aktivkohlefiltern 3 und 3' schädigen könnten, was bei der Zuführung von Luft zum Ozongenerator 4 eintreten würde. In den Ozonreaktoren 1 und 1' entstehen durch die Ozonisierung des Wassers zum einen roflockeneta und zum anderen biologisch angreifbare Verbindungen bzw. Verbindungsbruchstücke aus den schwer abbaubaren Verbindungen, die mit dem zu reinigenden Wasser zugeführt werden. Die Mikroflocken können in den Mehrschichtfiltern 2 und 2' mechanisch abgefiltert werden. Zur Reinigung der Mehrschichtfilter können diese beispielsweise von den übrigen Teilen der Vorrichtung getrennt und über gesonderte Leitungen im Gegenstrom durchgespült werden. Die ausgespülten Filterrückstände können dann beispielsweise dem Eingang einer üblichen Kläranlage zugeführt werden. Die Aktivkohlefilter 3 und 3' sind aufgrund ihrer mikrobiologischen Besiedlung weitestgehend selbstregenerierend ; lediglich der infolge der stetigen Strömung auftretende Austrag von Abrieb der Aktivkohle muß von Zeit zu Zeit ersetzt werden. Für die Erzielung der mikrobiologischen Besiedlung sind in der Regel keine besonderen Maßnahmen erforderlich, da sich in den meisten Anwendungsfällen der Vorrichtung und des Verfahrens diese Besiedlung nach relativ kurzer Zeit selbsttätig einstellt. Bedarfsweise kann diese Besiedlung auch durch eine entsprechende Impfung des Wassers erzielt werden. Die Vorrichtung ist dadurch technisch relativ einfach und mit niedrigen Kosten erstellbar und betreibbar, wobei die Betriebskosten, d.h. die Energiekosten für die Ozonerzeugung, die Kosten für den benötigten Sauerstoff und die Kosten für den Ersatz von Filtermaterial nach ersten praktischen Versuchen deutlich niedriner liegen als bei herkömmlichen Verfahren. Auch die Investitionskosten sind aufgrund der technischen Einfachheit der Vorrichtung und der mehrfachen Verwendbarkeit gleicher Baugruppen bei mehrstufiger Ausführung relativ gering.

**Patentansprüche**

1. Verfahren zur Reinigung von Wasser, welches mit schwer abbaubaren Verbindungen belastet ist, unter Anwendung von Ozon,
   dadurch gekennzeichnet, daß vorgereinigtes bzw. von leicht abbaubaren Verbindungen freies Wasser im Durchlauf
   a) einer Ozonisierung mit einer solchen Ozonkonzentration unterzogen wird, bei welcher nur eine Anoxidierung der in dem Wasser enthaltenen schwer abbaubaren Verbindungen erfolgt,
   b) anschließend mechanisch gefiltert wird und
   c) danach einer biologischen Reinigung durch mikrobiologisch besiedelte Aktivkohle unterzogen wird.

2. Verfahren nach Anspruch 1, dadurch gekennzeichnet, daß die die Verfahrensschritte a) bis c) umfassende Verfahrensschrittfolge einmal oder mehrmals mit abnehmender Ozonkonzentration wiederholt wird.

3. Verfahren nach Anspruch 2, dadurch gekennzeichnet, daß bei der Reinigung von Brunnenwasser und/oder Abwässern aus dem kommunalen Bereich die erste Ozonisierung mit einer Ozonkonzentration von 15 bis 25 mg/l Wasser und die zweite und gegebenenfalls jede weitere Ozonisierung mit einer geringeren Ozonkonzentration von 5 bis 15 mg/l Wasser erfolgt.

4. Verfahren nach Anspruch 2, dadurch gekennzeichnet, daß bei der Reinigung von Prozeßabwässern aus dem industriellen Bereich die erste Ozonisierung mit einer Ozonkonzentration von 25 bis 300 mg/l Wasser und die zweite und gegebenenfalls jede weitere Ozonisierung mit einer geringeren Ozonkonzentration von 15 bis 150 mg/l Wasser erfolgt.

5. Verfahren nach wenigstens einem der Ansprüche 1 bis 4, dadurch gekennzeichnet, daß das benötigte Ozon in einem elektrisch betriebenen Ozongenerator erzeugt wird und daß dem Ozongenerator hierzu trockener Sauerstoff zugeführt wird.

6. Verfahren nach wenigstens einem der Ansprüche 1 bis 5, dadurch gekennzeichnet, daß vor dem Verfahrensschritt a) und gegebenenfalls vor jeder Wiederholung der Verfahrensschrittfolge a) bis c) von Zeit zu Zeit oder stetig der TOC-Wert (totaler organisch gebundener Kohlenstoff) oder der CSB-Wert (chemischer Sauerstoffbedarf) des zu reinigenden Wassers erfaßt wird und daß dieser erfaßte Wert als Leitparameter für die anzuwendende Ozonkonzentration bei der Ozonisierung des Wassers im Verfahrensschritt a) verwendet wird.

7. Verfahren nach wenigstens einem der Ansprüche 1 bis 6, dadurch gekennzeichnet, daß die Verfahrensschrittfolge a) bis c) auf einen abgezweigten Teilstrom des zu reinigenden Wassers angewendet wird.

8. Verwendung des Verfahrens nach wenigstens einem der Ansprüche 1 bis 7, dadurch gekennzeichnet, daß die Verfahrensschrittfolge a) bis c) für die Endreinigung von Abwasser eingesetzt wird, welches zuvor in einem herkömmlichen, für die Reinigung von kommunalen und/oder gewerblichen Abwässern benutzten Klärverfahren gereinigt wurde.

9. Verwendung des Verfahrens nach wenigstens einem der Ansprüche 1 bis 7, dadurch gekennzeichnet, daß die Verfahrensschrittfolge a) bis c) für die Reinigung von verunreinigtem Grundwasser eingesetzt wird, wobei vorzugsweise das zu reinigende Grundwasser in einem zentralen Punkt eines Verunreinigungsbereiches gewonnen und das nach Durchlaufen der Verfahrensschrittfolge a) bis c) gereinigte Wasser in einem oder mehreren Punkten außerhalb des Verunreinigungsbereiches wieder dem Grundwasser zugeführt wird.

10. Verwendung des Verfahrens nach wenigstens einem der Ansprüche 1 bis 7, dadurch gekennzeichnet, daß die Verfahrensschrittfolge a) bis c) für die Reinigung von im Kreislauf geführtem Prozeßwasser für Produktions- und/oder Verarbeitungszwecke eingesetzt wird.

11. Vorrichtung zur Durchführung des Verfahrens nach wenigstens einem der Ansprüche 1 bis 7, dadurch gekennzeichnet, daß die Vorrichtung folgende Teile umfaßt :

a) wenigstens einen Ozonreaktor (1, 1'), welcher von einem Ozongenerator (4) aus mit der jeweils benötigten Ozonmenge versorgbar ist und in welchem Wasser ozonisierbar ist,

b) wenigstens einen dem Ozonreaktor (1, 1') nachgeschalteten Mehrschichtfilter (2, 2'), mittels welchem das vom Ozonreaktor (1, 1') kommende Wasser mechanisch filterbar ist und

c) wenigstens einen dem Mehrschichtfilter (2, 2') nachgeschalteten Aktivkohlefilter (3, 3'), dessen Aktivkohlefüllung mikrobiologisch besiedelt ist,

wobei der Vorrichtung über einen Zulauf (11) stetig zu reinigendes Wasser zuführbar ist und wobei über einen Auslauf (14, 14') stetig gereinigtes Wasser von der Vorrichtung abführbar ist.

12. Vorrichtung nach Anspruch 11, dadurch gekennzeichnet, daß die Vorrichtung zwei oder mehr hintereinander geschaltete Stufen von je einem Ozonreaktor (1, 1'), Mehrschichtfilter (2, 2') und Aktivkohlefilter (3, 3') umfaßt.

13. Vorrichtung nach Anspruch 12, dadurch gekennzeichnet, daß die Vorrichtung umschaltbar ist zwischen einem Betrieb allein einer Stufe und einem Betrieb zweier oder mehrerer hintereinander geschalteter Stufen.

14. Vorrichtung nach wenigstens einem der Ansprüche 11 bis 13, gekennzeichnet durch wenigstens einen im Zulauf (11) angeordneten Sensor für eine selbsttätige Erfassung des aktuellen TOC- oder CSB-Wertes des zugeführten, zu reinigenden Wassers und durch eine die Ozonzugabe in das Wasser im Ozonreaktor (1, 1') mengenmäßig nach Maßgabe der erfaßten TOC- oder CSB-Werte und der den Ozonreaktor (1, 1') je Zeiteinheit durchströmenden Wassermenge regelnde Steuereinheit.

15. Vorrichtung nach wenigstens einem der Ansprüche 11 bis 14, dadurch gekennzeichnet, daß der Ozonreaktor (1, 1') ein Schlaufenreaktor mit wenigstens einem Injektor für die Ozonzugabe in das Wasser ist, daß der Mehrschichtfilter (2, 2') ein Abstromfilter mit einer Bims-Quarzsand-Füllung ist und daß der Aktivkohlefilter (3, 3') ein Aufstromfilter ist.

16. Vorrichtung nach wenigstens einem der Ansprüche 11 bis 15, dadurch gekennzeichnet, daß die Verweilzeit des Wassers im Ozonreaktor (1, 1') zwischen 10 und 30 Minuten, im Mehrschichtfilter (2, 2') zwischen 10 und 20 Minuten und im Aktivkohlefilter (3, 3') zwischen 20 und 60 Minuten beträgt und daß die Fließgeschwindigkeit des Wassers im Mehrschichtfilter (2, 2') zwischen 7,5 und 15 m/h und im Aktivkohlefilter (3, 3') zwischen 2,5 und 7,5 m/h liegt.

17. Vorrichtung nach wenigstens einem der Ansprüche 11 bis 16, dadurch gekennzeichnet, daß die Vorrichtung als in den Auslauf einer herkömmlichen, für die Reinigung von kommunalen und-/oder gewerblichen Abwässern eingesetzten Kläranlage eingeschaltete Reinigungsendstufe ausgebildet ist.

18. Vorrichtung nach wenigstens einem der Ansprüche 11 bis 16, dadurch gekennzeichnet, daß die Vorrichtung als Einrichtung zur Grundwassersanierung ausgebildet ist, wobei der Vorrichtung ein oder mehrere Wassergewinnungsbrunnen innerhalb eines Verunreinigungsbereiches vorgeschaltet und ein oder mehrere Wasserrückführungsbrunnen außerhalb des Verunreinigungsbereiches nachgeschaltet sind.

19. Vorrichtung nach wenigstens einem der Ansprüche 11 bis 16, dadurch gekennzeichnet, daß die Vorrichtung als in eine Wiederaufbereitungsanlage für im Kreislauf eingesetztes Prozeßwasser eingeschaltete Aufbereitungsendstufe ausgebildet ist.

EP 0 438 073 A1

40

Ozon-Generator  4

41'

15

41

12

Mehrschichtfilter  2

Aktivkohlefilter  3

14

Ozonreaktor  1

11

13

12'

Mehrschichtfilter  2'

Aktivkohlefilter  3'

Ozonreaktor  1'

11'

13'

14'

1.Stufe

2. Stufe

Europäisches
Patentamt

# EUROPÄISCHER RECHERCHENBERICHT

Nummer der Anmeldung

EP 91 10 0201

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DD-A- 233 825 (FORSCHUNGSZENTRUM WASSERTECHNIK) <br> * Das ganze Dokument * <br> --- | 1-3,5,7 ,11,12 | C 02 F 1/78 <br> C 02 F 3/12 <br> C 02 F 3/06 |
| Y | PATENT ABSTRACTS OF JAPAN, Band 14, Nr. 397 (C-752)[4340], 28. August 1990; & JP-A-63 300 024 (TOSHIBA) 07-06-1990 <br> --- | 1,3,11 | |
| Y | FR-A-2 109 970 (LABORATIUM FÜR ADSORPTIONSTECHNIK) <br> * Seite 2, Zeilen 1-21; Seite 3, Beispiel 1 - Seite 5 * | 2,12 | |
| A | --- | 6 | |
| Y | CA-A-1 028 581 (BIRBECK) <br> * Seite 17, Zeilen 5-13; Figur 1 * <br> --- | 5,7 | |
| A | PATENT ABSTRACTS OF JAPAN, Band 12, Nr, 117 (C-487), 13. April 1988; & JP-A-62 241 598 (TAKASHI MAE) 22-10-1987 <br> --- | 1,8,11 | |
| A | FR-A-2 486 059 (OMNIUM D'ASSAINISSEMENT) <br> * Ansprüche 1,2 * <br> --- | 1,11 | RECHERCHIERTE SACHGEBIETE (Int. Cl.5) <br><br> C 02 F |
| A | EP-A-0 297 417 (NORDDEUTSCHE SEEKABELWERKE) <br> * Zusammenfassung * <br> --- | 1,11 | |
| A | EP-A-0 054 248 (LINDE) <br> --- | | |
| A,P | DE-A-3 905 958 (CHEMISCHES LABOR. DR. ERWIN WESSLING) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 16-04-1991 | KASPERS H.M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)